# EUROPÄISCHE PATENTANMELDUNG

(11) **EP 0 625 437 A1**
(43) Veröffentlichungstag der Anmeldung: **23.11.1994**
(21) Anmeldenummer: 94107802.4
(22) Anmeldetag: 19.05.1994
(51) Int. Cl.: B60C 27/08

(54) **Stegglied für Reifenkette**

(30) Priorität: 20.05.1993 IT TP930347
(71) Anmelder: ACCIAIERIE WEISSENFELS S.P.A., I-33010 Fusine Valromana (IT)
(72) Erfinder: Pittino, Gianni, I-33010 Fusine Valromana (Tarvisio (IT)
(74) Vertreter: Geyer, Werner

(57) **Zusammenfassung**

Bei einem Stegglied für Reifenketten mit einem Gliedkörper (1), der mindestens eine Aufnahmeöffnung (2; 3) zum Anschluß von Verbindungsgliedern aufweist und unten mit einer Reifenanlagefläche (4) sowie oben mit einer bodenseitigen Anlagefläche versehen ist, die von den Oberflächen (9) vom Profilstollen (5) gebildet wird, welche in Längsrichtung des Gliedkörpers (1) jeweils von im wesentlichen quer verlaufenden Vertiefungen (8) begrenzt werden, verläuft jede von einem Profilstollen (5) zum Boden (7) einer angrenzenden Vertiefung (8) führende Seitenwand (6) im wesentlichen senkrecht zur Oberfläche (9) des Profilstollens (5). Dabei erstreckt sich jede Vertiefung (8) quer zur Längsrichtung des Gliedkörpers (1) nur über dessen etwa halbe Breite. Der Boden (7) jeder Vertiefung (8) wird von einer ebenen Schrägfläche gebildet, die vom Mittelbereich der bodenseitigen Anlagefläche des Gliedkörpers (1) aus bis hin zur Einmündung der Vertiefung (8) in eine der beiden Längsseitenflächen des Gliedkörpers (1) nach unten abfällt.

## Beschreibung

Die Erfindung bezieht sich auf ein Stegglied für Reifenketten, mit einem Gliedkörper, der mindestens eine Aufnahmeöffnung zum Anschluß von Verbindungsgliedern aufweist und unten mit einer Reifenanlagefläche sowie oben, d.h. auf seiner dieser gegenüberliegenden Seite, mit einer bodenseitigen Anlagefläche versehen ist, wobei letztere von den Oberflächen von Profilstollengebildet wird, die in Längsrichtung des Gliedkörpers jeweils von im wesentlichen quer verlaufenden Vertiefungen begrenzt werden.

Aus der DE-C-37 19 751 ist ein Stegglied bekannt, bei dem auf seiner der Reifenanlagefläche abgewandten, bodenseitigen Aufstandsfläche entlang der Längsachse im Querschnitt kreisförmige Vertiefungen eingelassen und gleichzeitig auch an den Längsseitenflächen des Gliedkörpers im Querschnitt wellenartige Mulden vorgesehen sind, die von der bodenseitigen Aufstandsfläche des Gliedkörpers ausgehen. Bei diesem bekannten Stegglied wird eine relativ große Oberfläche und damit auch eine hohe Verschleißbeständigkeit erreicht, seine Griffigkeit ist jedoch, insbesondere auch auf relativ weichen Böden wie z.B. Waldböden bei Schwerlasteinsatz im Forstverkehr, nicht sehr groß, weil sich die entlang der Längsmittelachse des Gliedkörpers angebrachten Vertiefungen unter Last sehr rasch vom weichen Boden zusetzen und dann kaum mehr zur Griffigkeit des Gliedes beitragen können.

Demgegenüber weist ein anderes bekanntes Stegglied der eingangs genannten Art, wie es aus der DE-B-17 80 717 bekannt ist, eine verbesserte Griffigkeit auf, da hier die bodenseitige Aufstandsfläche auf den Oberflächen grober Profilstollen gebildet wird, zwischen denen Quervertiefungen verlaufen, wobei die Seitenflächen der Profilstollen zu den Querkanälen durch nach außen divergierende, schräge Seitenflanken benachbarter Profilstollen begrenzt werden. Durch die Zwischenräume zwischen den Profilstollen wird deren Zusetzen durch das Material des Untergrundes erschwert und damit die Griffigkeit verbessert. Allerdings tritt auch bei der Verwendung dieser Stegglieder nach einiger Zeit immer noch ein Zusetzen der Querkanäle auf, wodurch dann die Griffigkeit wieder deutlich leidet. Da die Profilstollen an ihren Spitzen jedoch nur relativ kleine Anlage- bzw. Abstützflächen gegenüber dem Untergrund ausbilden, weist das bekannte Stegglied auch nur eine vergleichsweise kleine bodenseitige Aufstandsfläche auf, was zu einem raschen Verschleiß führt.

Ausgehend hiervon liegt der Erfindung die Aufgabe zugrunde, ein Stegglied der eingangs genannten Art so weiterzuentwickeln, daß es bei einer noch erhöhten Verschleißbeständigkeit gleichzeitig eine verbesserte Griffigkeit zum Untergrund auch bei längerem Schwerlasteinsatz bei weicheren Böden, wie z.B. Waldböden, aufweist.

Erfindungsgemäß wird dies bei einem Stegglied der eingangs genannten Art dadurch erreicht, daß jede von einem Profilstollen zum Boden einer angrenzenden Vertiefung führende Seitenwand im wesentlichen senkrecht zur Oberfläche des Profilstollens verläuft, jede Vertiefung sich quer zur Längsrichtung des Wegkörpers nur über etwa dessen halbe Breite erstreckt und der Boden jeder Vertiefung von einer ebenen Schrägfläche gebildet wird, die vom Mittelbereich der bodenseitigen Anlagefläche des Gliedkörpers aus verläuft und von dort bis hin zur Einmündung der Vertiefung in eine der beiden Längsseitenflächen des Gliedkörpers nach unten schräg abfällt.

Das erfindungsgemäße Stegglied erreicht in den Vertiefungen zwischen den Profilstollen einen gut wirksamen "Selbstreinigungseffekt" dadurch, daß sich zum einen die Vertiefungen nicht über die ganze Breite, sondern nur über etwa eine Hälfte der Breite des Steggliedes erstrecken und ihre Böden von der Mitte des Steggliedes aus zu der entsprechenden Seitenfläche des Steggliedes hin schräg abfallen. Denn dadurch wird das im weichen Boden in die Vertiefungen eindringende Bodenmaterial unter der Last des Fahrzeugs wie auf einer schiefen Ebene von dem in Längsrichtung des Gliedkörpers gesehen mittleren Flächenbereich laufend über die schräge Ebene nach den Seiten des Gliedkörpers transportiert und kann dort seitlich abgegeben werden. Überdies wird dadurch, daß die von den Profilstollen zum Boden der angrenzenden Vertiefungen führenden Seitenwände im wesentlichen senkrecht zu der in der bodenseitigen Anlagefläche liegenden Oberfläche des Profilstollens verlaufen, in Längsrichtung des Steggliedes gesehen ein scharfkantiger Übergang zwischen diesen Seitenflächen und den bodenseitigen Anlageflächen der Profilstollen geschaffen, der ein besseres Verhaken in einem weichen Untergrund als bei den bekannten Steggliedern gewährleistet, bei denen diese Übergangsflächen in Form schräger Seitenflanken verlaufen. Gleichzeitig wird durch diese Ausrichtung der Seitenflächen auch die Möglichkeit geschaffen, daß die gesamte bodenseitige Anlagefläche des Steggliedes unter Berücksichtigung der vorgegebenen Bodenflächen der Vertiefungen größtmöglich ausgebildet ist, da kein Flächenanteil durch schräg verlaufende Seitenflächen der Profilstollen verlorengeht. Dabei bleibt die Größe der Verschleißfläche in der bodenseitigen Aufstandsfläche auch bei Auftreten des unverhinderbaren Verschleißes im wesentlichen konstant und verkleinert sich nicht.

In bevorzugter Ausgestaltung des erfindungsgemäßen Steggliedes werden die Vertiefungen auf beiden Seiten der Längsmittellinie des Gliedkörpers symmetrisch zu dieser unter Ausbildung eines schmalen mittleren Zwischensteges jeweils zwischen zwei (in Bezug auf die Längsmittellinie des Gliedkörpers) nebeneinander angeordneten Vertiefungen vorgesehen. Gleichermaßen vorteilhaft können die Vertiefungen beidseits der Längsmittellinie des Gliedkörpers jedoch auch, in dessen Längsrichtung gesehen, zueinander versetzt sein.

Eine andere vorteilhafte Ausgestaltung der Erfindung besteht auch darin, daß die von den einzelnen Profilstollen jeweils zum Boden angrenzender Vertiefungen führenden Seitenwände im wesentlichen senkrecht zur Längsmittellinie des Gliedkörpers verlaufen. Gleichermaßen bevorzugt können die von den Profilstollen zu den Böden angrenzender Vertiefungen führenden Seitenwände jedoch auch schräg zur Längsmittellinie des Gliedkörpers ausgerichtet sein und zwar schräg nach vorne und/oder schräg nach hinten (jeweils in Längsrichtung des Gliedkörpers gesehen). Hierdurch lassen sich für spezifische Einsatzfälle gegebenenfalls günstigere Vortriebseigenschaften erreichen. Dabei können vorzugsweise die beiden von zwei in Längsrichtung des Gliedkörpers aufeinanderfolgenden Profilstollen zum Boden der dazwischen ausgebildeten Vertiefung führenden Seitenwände zueinander entweder parallel oder (ebenfalls vorzugsweise) in Richtung zu der Längsseitenfläche des Gliedkörpers hin, in welche sie münden, divergierend angeordnet sein. Besonders vorteilhaft ist es, wenn die beiden Seitenwände eines Profilstollens, die zu den Böden zweier ihn begrenzender Vertiefungen führen, in einer gemeinsamen Abschlußkante an der entsprechenden Längsseitenkante des Gliedkörpers münden. Hierdurch erfährt der entsprechende Profilstollen in Richtung auf die Seitenfläche des Gliedkörpers hin eine im Querschnitt spitze Ausbildung, die ein gutes Eingraben in einen weichen Boden begünstigt.

Eine andere, ebenfalls vorzugsweise Ausgestaltung der Erfindung besteht darin, daß an beiden Längsseitenflächen des Gliedkörpers zumindest in einem mittleren Längsbereich desselben in Längsrichtung hintereinanderliegende, im Querschnitt etwa dreieckige, nach außen ragende Vorsprünge ausgebildet sind, deren Spitzen auf einer ungefähr senkrecht zur bodenseitigen Anlagefläche des Gliedkörpers verlaufenden Ebene liegen und die etwa in Höhe der Einmündestellen der Vertiefungen auf dieser Längsseite des Gliedkörpers angebracht sind. Durch die Anordnung dieser zusätzlichen, seitlich vorragenden Vorsprünge an beiden Längsseiten des Gliedkörpers wird die Möglichkeit geschaffen, daß ab einem gewissen seitlichen Verschwenkwinkel des Steggliedes diese Vorsprünge in Eingriff mit der Unterlage gelangen können, wobei sich dieser Effekt mit zunehmendem Verkantungswinkel sogar noch verstärkt. Dadurch wird es möglich, daß auch bei einem stärker verkanteten Stegglied stets eine sehr gute Griffigkeit zum Boden aufrechterhalten bleibt, wobei durch die Anordnung dieser seitlichen Vorsprünge etwa in Höhe der Einmündestellen der Vertiefungen an den Längsseiten erreicht wird, daß die seitlichen Vorsprünge auch bei einer relativ starken seitlichen Verkantung noch gut im Boden greifen können. Bevorzugt werden dabei auf jeder Längsseite des Gliedkörpers ein oder mehrere Profilstollen mit ihren dortigen Endflächen jeweils als Verlängerung eines in gleicher Längsposition angebrachten Vorsprungs ausgebildet, was auch schon bei einem kleinen seitlichen Verkantungswinkel dazu führt, daß dann dort schon ein entsprechender Vorsprung zum Eingriff mit dem Boden zur Verfügung steht.

Die Erfindung wird nachfolgend anhand der Zeichnung im Prinzip beispielshalber noch näher erläutert. Es zeigen:
Fig. 1 eine schräge Perspektivansicht (von vorne oben) auf ein erfindungsgemäßes Stegglied;
Fig. 2 eine Vorderansicht des Steggliedes aus Fig. 1;
Fig. 3 eine Draufsicht auf das Stegglied aus Fig. 1;
Fig. 4 bis 7 perspektivische Schrägansichten weiterer Ausführungsformen eines erfindungsgemäßen Steggliedes, sowie
Fig. 8 eine prinzipielle Vorderansicht (in Längsrichtung gesehen) eines erfindungsgemäßen Steggliedes zur Darstellung der Eingreifverhältnisse der seitlichen Vorsprünge bei Verkantung.

In der folgenden Figurenbeschreibung werden für die verschiedenen Figuren Teile, die in ihrer Funktion gleich sind, jeweils auch mit denselben Bezugszeichen versehen. Mit den Ausdrücken "oben" bzw. "unten" soll eine Ausrichtung derart bezeichnet sein, daß "oben" die der Reifenanlagefläche abgewandte Seite und "unten" die zur Reifenanlagefläche hin liegende Seite des Gliedkörpers angibt.

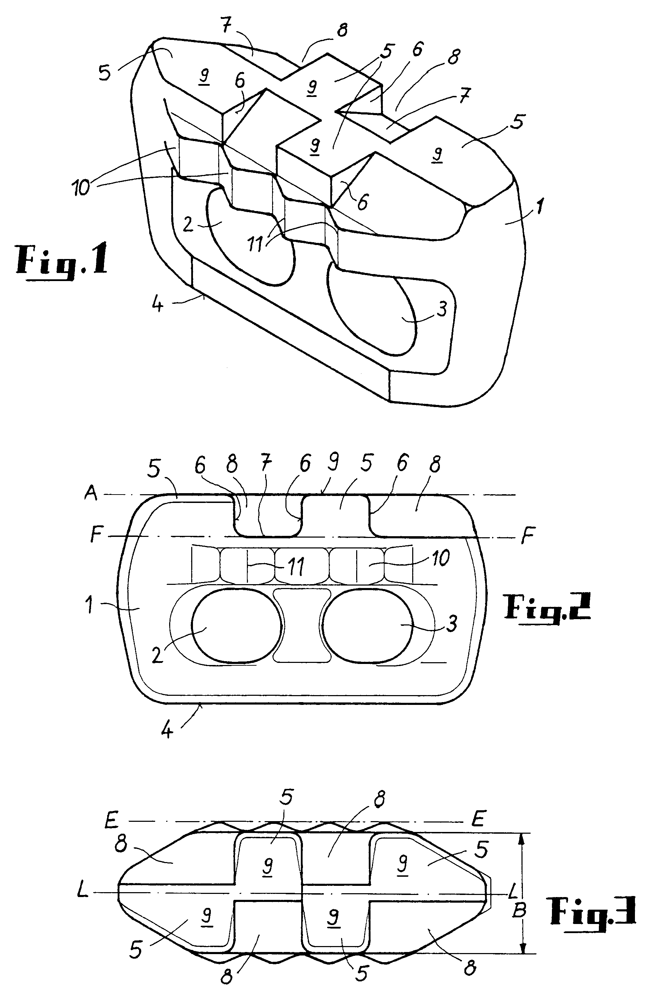

In Fig. 1 ist ein Stegglied gezeigt, wie es für Reifenschutzketten eingesetzt wird, die in schwerem Lastbetrieb auf weicheren Böden, z.B. auf Waldböden o.ä., eingesetzt werden.

Das Stegglied weist einen Gliedkörper 1 mit zwei Aufnahmeöffnungen 2, 3 zum Anschluß von (nicht dargestellten) Verbindungsgliedern auf.

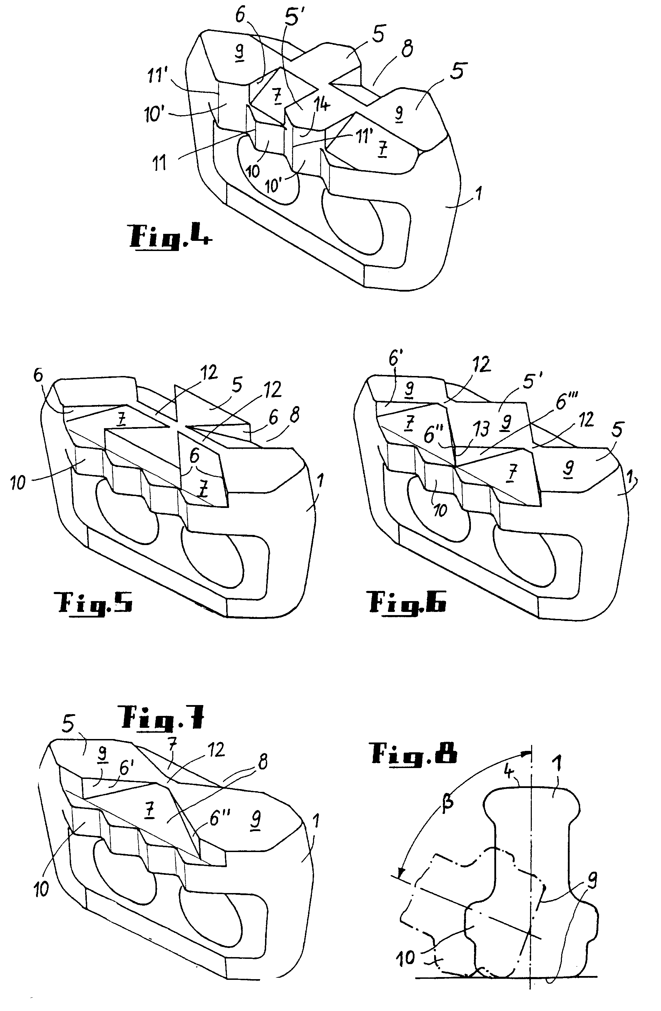

Der Gliedkörper 1 ist ferner unten (entsprechend den Darstellungen in den Figuren) mit einer Reifenanlagefläche 4 und an seiner dieser gegenüberliegenden Oberseite, die beim Einsatz der Kette mit dem Boden bzw. der Unterlage in Eingriff kommt ("bodenseitige Aufstandsfläche"), mit einer Mehrzahl grober Profilstollen 5 versehen. Die Profilstollen 5 verlaufen beidseits der Längsmittellinie L-L des Gliedkörpers 1 in zueinander versetzter Anordnung und erstrecken sich jeweils über etwa die Hälfte der Breite B des Gliedkörpers 1. Die auf der Oberseite des Gliedkörpers 1 ausgebildeten Oberflächen 9 der Profilstollen 5 liegen alle in einer Ebene A-A (Fig. 2).

Auf jeder Seite (relativ zur Längs-Mittellinie L-L gesehen) des Gliedkörpers 1 sind hintereinanderliegende Profilstollen 5 durch Vertiefungen 8 voneinander getrennt, d.h. sie werden in Längsrichtung des Gliedkörpers 1 von den Vertiefungen 8 begrenzt (soweit nicht eine äußere Endfläche des Profilgliedes selbst die Begrenzung darstellt).

Wie insbesondere die Fig. 1 und 2 zeigen, bilden Seitenwände 6 der Profilstollen 5 den Übergang von deren Oberfläche 9 zu den Böden 7 der Vertiefungen 8. Diese Seitenwände 6 verlaufen senkrecht zu der Ebene, in der die bodenseitige Aufstandsfläche des Steggliedes liegt, die sich aus der Summe der bodenseitigen Oberflächen 9 der Profilstollen 5 zusammensetzt.

Die Vertiefungen 8 erstrecken sich, wie gut den Fig. 1 und 3 entnehmbar ist, nicht etwa über die gesamte Breite B des Steggliedes, sondern nur etwa über dessen halbe Breite hinweg. Dabei sind die Böden 7 der Vertiefungen 8 schräg von der Mitte des Steggliedes zu dessen jeweiliger Außenseite, an der die betreffende Vertiefung 8 mündet, nach unten abfallend angeordnet. Hierdurch bildet jeder Boden 7 der zugehörigen Vertiefung 8 eine "schiefe Ebene" aus, die so angeordnet ist, daß sie vom oberen, mittleren Bereich des Steggliedes her zu dessen Seite hin nach unten abfällt. Dadurch wird beim Eindrücken des Steggliedes in einen etwas weichen Boden in die Vertiefungen 8 eindringendes Material des Bodens unter dem Auflagedruck und der Relativbewegung des Rades (und damit der Kette) zum Boden laufend von der Mitte des Steggliedes her seitlich nach außen weggefördert. Hierdurch tritt ein vorzüglicher Selbstreinigungseffekt ein, der dafür Sorge trägt, daß stets neues Material des Bodens in die Vertiefungen eindringen kann, wodurch sichergestellt ist, daß die groben Profilstollen sich immer gut in den Boden eingraben können und nicht zusetzen.

In den Fig. 4 bis 7 sind andere Ausführungsformen von Steggliedern gezeigt, bei denen die Formgebung bzw. Anordnung der Profilstollen 5 und der Vertiefungen 8 unterschiedlich ist:

Bei dem Stegglied aus Fig. 5 sind die Vertiefungen 8 symmetrisch zur Längs-Mittellinie der bodenseitigen Anlagefläche angeordnet und, in Querrichtung des Steggliedes gesehen, jeweils über einen schmalen Mittelsteg 12 voneinander getrennt. Dabei sind die in Längsrichtung des Profiles vorne (d.h. in Fig. 5: links) liegenden Vertiefungen schräg nach vorne und die weiter hinten (also in Fig. 5: rechts) angebrachten Vertiefungen 8 schräg nach hinten gerichtet, wobei die Seitenwände 6 jeder Vertiefung 8 parallel zueinander verlaufen.

In den Fig. 6 und 7 sind zwei Ausführungsformen für solche Stegglieder gezeigt, bei denen die Seitenwände der Vertiefungen 8 nicht mehr parallel zueinander sind, sondern vom Mittelbereich des Gliedkörpers 1 her zur entsprechenden Außenseite hin konvergieren, wie dieses den Fig. 6 und 7 gezeigt ist. Während bei der Ausführungsform nach Fig. 7 beidseits der Längsmittellinie des Gliedkörpers 1 jeweils nur eine große Vertiefung 8 mit nach außen konvergierenden seitlichen Begrenzungswänden 6' und 6'' vorgesehen ist (die nur über einen dünnen mittleren Zwischensteg 12 an ihren Scheitelpunkten voneinander getrennt sind), sind bei der Ausführungsform der Fig. 6 beidseits der Längsmittellinie jeweils zwei direkt hintereinanderliegende Vertiefungen 8 vorgesehen. Die Lage dieser Vertiefungen ist so gewählt, daß die beiden Seitenwände 6'' und 6''' des mittleren Profilstollens 5' an ihren an der Seitenfläche des Gliedkörpers 1 liegenden Enden eine gemeinsame Endkante 13 ausbilden. Auch hier sind wieder die Scheitel der in Längsrichtung des Gliedkörpers 1 gesehen nebeneinanderliegenden (symmetrisch zu dieser Längs-Mittellinie angeordneten) Vertiefungen 8 über schmale Zwischenstege 12 getrennt.

Bei allen dargestellten Ausführungsformen sind zudem auf jeder Langsseite des Gliedkörpers 1 zumindest innerhalb eines (in Längsrichtung gesehen) mittleren Abschnitts seitlich vorspringende, im Querschnitt dreieckförmige Vorsprünge 10 angeordnet (Fig. 1 bis 7), die unmittelbar hintereinander in Längsrichtung des Gliedkörpers 1 verlaufen und im Querschnitt gleichschenkelige Dreiecke ausbilden. Diese seitlichen Vorsprünge 10 ragen etwa rechtwinkelig zur entsprechenden Längsseitenfläche des Gliedkörpers 1 vor, wobei ihre Spitzen 11 innerhalb einer Ebene E-E (Fig. 3) liegen, die ungefähr senkrecht zur bodenseitigen Anlagefläche des Gliedkörpers 1 verläuft. Die seitlichen Vorsprünge 10 sind etwa in Höhe der Einmündestellen der Vertiefungen 7 in der betreffenden Längsseitenfläche des Gliedkörpers 1 angeordnet und erstrecken sich bis etwas überhalb der Aufnahmeöffnungen 2 und 3, wie dies aus Fig. 3 gut entnommen werden kann.

Fig. 8 zeigt in einer rein schematischen Darstellung eine Ansicht (in Längsrichtung gesehen) des Steggliedes nach Fig. 1, und zwar in einer senkrechten und in einer um einen Winkel β verkanteten Lage, wobei ersichtlich ist, daß in letzterer die seitlichen Vorsprünge 10 ebenfalls in Eingriffskontakt mit der Unterlage 20 (etwa einem Waldboden) gelangen. Aus Fig. 9 ist entnehmbar, daß hier eine gute Griffigkeit noch bei einer relativ großen seitlichen Verkantung β eintritt, wobei solche relativ großen Verkantungen durchaus auch im Verbund einer aufgezogenen Kette unter ungünstigen Lastbedingungen eintreten können.

In Verbindung mit den seitlichen Vorsprüngen 10 ist noch auf die spezifische Ausführungsform des Steggliedes gemäß Fig. 4 zu verweisen:

Dort sind auf jeder Seite des Steggliedes 1 zwei Profilstollen 10' so angeordnet, daß sie sich auf ihren Außenseiten jeweils als Verlängerung eines direkt unter ihnen angeordneten seitlichen Vorsprungs darstellen, so daß die an der Spitze des Vorsprungs liegende Kante 11' jeweils bis oben in die bodenseitige Aufstandsfläche hochragt. Bei einer solchen Ausführungsform können schon bei kleinen Verkantungen die Spitzen 11' dieser nach oben hochlaufenden Vorsprünge 10' seitlich in den Boden eingreifen, wodurch ein besonders großer Verkippungsbereich (von kleinsten bis zu relativ großen Verkippwinkeln β) erfaßt wird.

## Patentansprüche

1. Stegglied für Reifenketten, mit einem Gliedkörper, der mindestens eine Aufnahmeöffnung zum Anschluß von Verbindungsgliedern aufweist und unten mit einer Reifenanlagefläche sowie oben mit einer bodenseitigen Anlagefläche versehen ist, wobei letztere von den Oberflächen von Profilstollen gebildet wird, die in Längsrichtung des Gliedkörpers jeweils von im wesentlichen quer verlaufenden Vertiefungen begrenzt werden, **dadurch gekennzeichnet**, daß jede von einem Profilstollen (5) zum Boden (7) einer angrenzenden Vertiefung (8) führende Seitenwand (6) im wesentlichen senkrecht zur Oberfläche (9) des Profilstollens (5) verläuft, jede Vertiefung (8) sich quer zur Längsrichtung des Gliedkörpers (1) nur über etwa dessen halbe Breite (B) erstreckt und der Boden (7) jeder Vertiefung (8) von einer ebenen Schrägfläche gebildet wird, die vom Mittelbereich der bodenseitigen Anlagefläche des Gliedkörpers (1) aus bis hin zur Einmündung der Vertiefung (8) in eine der beiden Längsseitenflächen des Gliedkörpers (1) nach unten abfällt.

2. Stegglied nach Anspruch 1, dadurch gekennzeichnet, daß die Vertiefungen (8) auf beiden Seiten der Längsmittellinie (L-L) des Gliedkörpers (1) symmetrisch zu dieser unter Ausbildung eines schmalen mittleren Zwischensteges (12) jeweils zwischen zwei nebeneinander angeordneten Vertiefungen (8) angebracht sind.

3. Stegglied nach Anspruch 1, dadurch gekennzeichnet, daß die Vertiefungen (8) beidseits der Längsmittellinie (L-L) des Gliedkörpers (1) in dessen Längsrichtung gesehen zueinander versetzt sind.

4. Stegglied nach einem der Ansprüche 1 bis 3, dadurch gekennzeichnet, daß die von den Profilstollen (5) zum Boden (7) angrenzender Vertiefungen (8) führenden Seitenwände (6) im wesentlichen senkrecht zur Längsmittelebene (L-L) des Gliedkörpers (1) verlaufen.

5. Stegglied nach einem der Ansprüche 1 bis 3, dadurch gekennzeichnet, daß die von dem Profilstollen (5) zum Boden (7) angrenzender Vertiefungen (8) führenden Seitenwände (6) schräg zur Längsmittellinie (L-L) des Gliedkörpers (1) verlaufen.

6. Stegglied nach Anspruch 5, dadurch gekennzeichnet, daß die beiden von zwei in Längsrichtung des Gliedkörpers (1) aufeinanderfolgenden Profilstollen (5) zum Boden (7) der dazwischen ausgebildeten Vertiefung (8) führenden Seitenwände (6) zueinander parallel verlaufen.

7. Stegglied nach Anspruch 5, dadurch gekennzeichnet, daß die beiden von zwei in Längsrichtung des Gliedkörpers (1) aufeinanderfolgenden Profilstollen (5) zum Boden (7) der dazwischen ausgebildeten Vertiefung (8) führenden Seitenwände (6', 6'') in Richtung zu der Längsseitenfläche des Gliedkörpers (1) hin, in welche die Vertiefung (8) mündet, divergieren.

8. Stegglied nach Anspruch 7, dadurch gekennzeichnet, daß die beide Seitenwände (6''; 6''') eines Profilstollens (5), die zu den Böden (7) zweier ihn begrenzender Vertiefungen (8) führen, in einer gemeinsamen Abschlußkante (13) an der entsprechenden Längsseitenfläche des Gliedkörpers (1) münden.

9. Stegglied nach einem der Ansprüche 1 bis 8, dadurch gekennzeichnet, daß an beiden Längsseitenflächen des Gliedkörpers (1) zumindest in einem mittleren Längsbereich desselben in Längsrichtung hintereinanderliegende, im Querschnitt etwa dreieckige, nach außen ragende Vorsprünge (10) ausgebildet sind, deren Spitzen (11) auf einer ungefähr senkrecht zur bodenseitigen Anlagefläche des Gliedkörpers (1) verlaufenden Ebene (E-E) liegen und die etwa in Höhe der Einmündestellen der Vertiefung (7) auf dieser Längsseite des Gliedkörpers (1) angebracht sind.

10. Stegglied nach Anspruch 9, dadurch gekennzeichnet, daß auf jeder Längsseite des Gliedkörpers (1) ein oder mehrere Profilstollen (5) mit ihren dortigen Endflächen (14) jeweils als Verlängerung eines in gleicher Längsposition angebrachten Vorsprungs (10') ausgebildet sind.
